# EUROPEAN PATENT SPECIFICATION

(11) **EP 4 322 297 B1**
(45) Date of publication and mention of the grant of the patent: **22.10.2025**
(21) Application number: 22895910.2
(22) Date of filing: 03.11.2022
(51) Int. Cl.: H01M 50/242, H01M 50/213, H01M 50/204, H01M 50/244

(54) **BATTERY PACK HAVING IMPROVED SHOCK RESISTANCE**
BATTERIEPACK MIT VERBESSERTER STOSSFESTIGKEIT
BLOC-BATTERIE AYANT UNE RÉSISTANCE AUX CHOCS AMÉLIORÉE

(30) Priority: 16.11.2021 KR 20210157889
(43) Date of publication of application: 14.02.2024
(73) Proprietor: LG Energy Solution, Ltd., Seoul 07335 (KR)
(72) Inventor: YOO, Dong Won, Daejeon 34122 (KR); SON, Young Su, Daejeon 34122 (KR); LEE, Young Kyu, Daejeon 34122 (KR); YANG, Seong Hwan, Daejeon 34122 (KR); BAE, Mun Jun, Daejeon 34122 (KR)
(74) Representative: Plasseraud IP
(86) International application number: PCT/KR2022/017077
(87) International publication number: WO 2023/090703

(56) References cited:
- EP-A1- 3 316 343
- WO-A1-2021/191923
- JP-A- 2010 146 879
- JP-B2- 6 662 395
- KR-A- 20190 095 048
- KR-A- 20210 042 656
- KR-A- 20210 103 280
- US-A1- 2016 006 014
- US-A1- 2018 301 773
- US-B2- 8 278 877

## Description

### [Technical Field]

The present invention relates to a battery pack having improved impact resistance, and more particularly to a battery pack having improved impact resistance configured such that a battery module is protected from internal vibration or impact and the battery pack is easily assembled.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are widely used in various fields, such as mobile devices, electric vehicles, hybrid electric vehicles, and industrial robots.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, a battery pack includes a battery pack case in order to package battery modules, and the battery modules are fixed in the battery pack case in order to prevent vibration or impact. In a conventional battery pack, the battery modules are generally fixed in the battery pack case through a separate structure, such as a bolt and nut.

However, it is impossible to completely protect the battery modules from external impact using only a known fastening means, such as a bolt and nut, and when a large number of bolts and nuts are used, the size of the battery pack is increased, since a fastening space is necessary.

(Prior Art Document)

(Patent Document 1) Korean Registered Patent Publication No. 2167632 (published on October 19, 2020)

Documents US 2016/006014 A1, US 2018/301773 A1, US 8278877 B2 and EP 3316343 A1 disclose battery packs having improved impact resistance.

### [Disclosure]

### [Technical Problem]

The present invention has been made in view of the above problems, and it is an object of the present invention to provide a battery pack having improved impact resistance configured such that an impact attenuation member is provided in a space between a battery module and the battery pack.

It is another object of the present invention to provide a battery pack having improved impact resistance configured to have a structure in which the size of the battery pack is not increased and the battery pack is easily assembled.

### [Technical Solution]

To this end, the invention relates to a battery pack according to claim 1.

This battery pack after the invention may present one or more of the features of dependent claims 2 or 3, in any combination allowed by the claims.

The invention also relates to a battery pack according to claim 4.

This battery pack after the invention may present one or more of the features of dependent claims 5 to 7, in any combination allowed by the claims.

The invention also relates to a device according to claim 8.

### [Advantageous Effects]

As is apparent from the above description, a battery pack having improved impact resistance according to the present invention has an advantage in that a first stopper constituted by a first pressing portion having a column shape made of an elastic material and a pair of wings is interposed between an outer surface of a module frame and an inner surface of a case, whereby it is possible to protect a battery module from external impact or vibration.

In addition, the battery pack having improved impact resistance according to the present invention has an advantage in that a second stopper constituted by a second pressing portion having a column shape made of an elastic material, a head portion, and a connection portion is interposed between the outer surface of the module frame and the inner surface of the case, whereby it is possible to protect the battery module from external impact or vibration.

In addition, the battery pack having improved impact resistance according to the present invention has a merit in that a receiving portion integrally formed with the case is provided, whereby it is possible to stably receive and fix the first stopper and the second stopper.

Furthermore, the battery pack having improved impact resistance according to the present invention has an advantage in that the first stopper and the second stopper are easily mounted in the case, whereby it is possible to achieve easy assembly.

### [Description of Drawings]

FIG. 1 is a perspective view of a battery pack according to a preferred embodiment of the present invention.
FIG. 2 is a plan view showing the interior of the battery pack shown in FIG. 1.
FIG. 3 is an enlarged view showing part A of FIG. 2.
FIG. 4 is a perspective view of a first stopper mounted in the battery pack according to the preferred embodiment of the present invention.
FIG. 5 is an enlarged view of a first receiving portion configured to receive the first stopper in part A of FIG. 3.
FIG. 6 is a perspective view of a module frame mounted in the battery pack according to the preferred embodiment of the present invention.
FIG. 7 is an enlarged view showing part B of FIG. 2.
FIG. 8 is a front perspective view of a second stopper mounted in the battery pack according to the preferred embodiment of the present invention.
FIG. 9 is a bottom perspective view of the second stopper shown in FIG. 8.
FIG. 10 is a perspective view of a second receiving portion in which the second stopper is mounted when viewed from the outside of a lower case.
FIG. 11 is a perspective view of the second receiving portion in which the second stopper is mounted when viewed from the inside of the lower case.
FIG. 12 is a perspective view illustrating the state in which the second stopper is mounted to part B of FIG. 2.
FIG. 13 is a perspective view of the second stopper before being mounted in the battery pack when viewed from below.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack having an impact attenuation member according to the present invention will be described with reference to the accompanying drawings.

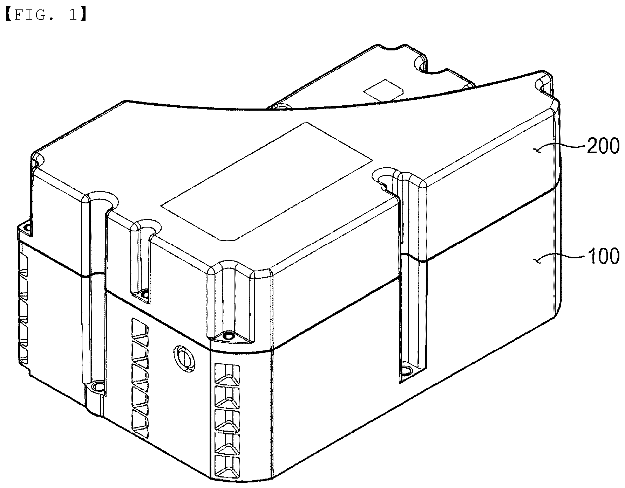

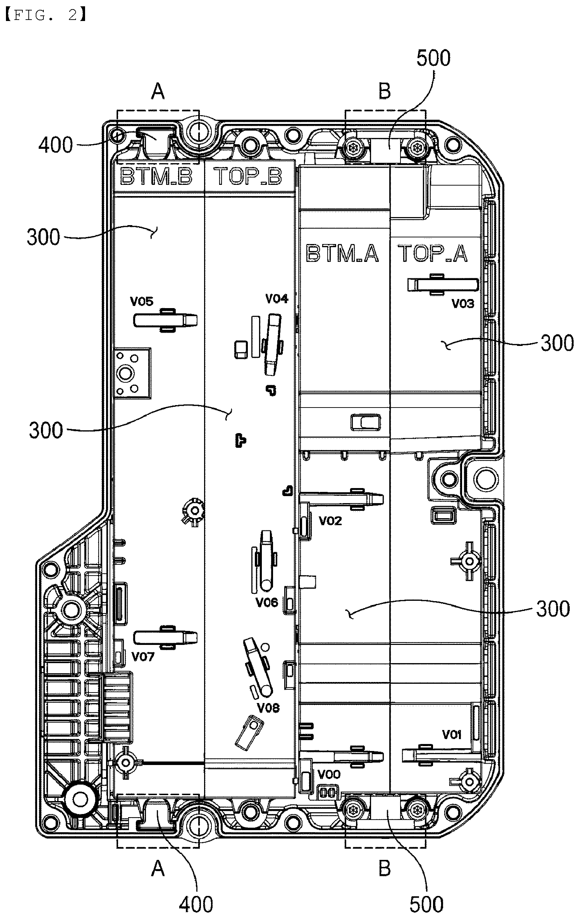

FIG. 1 is a perspective view of a battery pack according to a preferred embodiment of the present invention, and FIG. 2 is a plan view showing the interior of the battery pack shown in FIG. 1.

Referring to FIGs. 1 and 2, the battery pack according to the present invention includes a lower case 100, an upper case 200, a module frame 300, and a first stopper 400 and a second stopper 500 constituting an impact attenuation member.

Although the lower case 100 has a structure in which the lower case is surrounded by predetermined walls in the drawings, the present invention is not limited thereto, and the lower case may be replaced with a cover having no separate space.

In addition, although four module frames 300 are shown as being mounted, which, however, is merely an example, the number of the module frames may be increased or decreased.

In addition, although a pair of first stoppers 400 are shown as being located at the front and the rear (an upper part and a lower part in the drawings) of the leftmost module frame 300 and a pair of second stoppers 500 are shown as being located at the front and the rear of the rightmost module frame 300, it is obvious that a pair of stoppers may be located at the front and the rear of each module frame.

In addition, only the first stoppers 400 may be mounted at the front and the rear of each module frame 300, or the second stoppers 500 may be mounted at the front and the rear of each module frame 300.

Furthermore, stoppers may be further provided at sides of module frames 300 disposed adjacent to side walls of the lower case 100, in addition to the front and the rear thereof.

When the battery pack is abnormal, for example when external impact is applied to the battery pack or when the battery pack drops, the first stopper 400 and the second stopper 500 attenuate impact to protect a battery module having a battery cell received therein.

The lower case 100 has a space sufficient to receive the module frame 300, and is surrounded by side walls such that the battery module is primarily protected from external impact. The upper case 200 may be seated on the lower case 100, and the cases may be fixed to each other via a known fastening means, such as a long bolt.

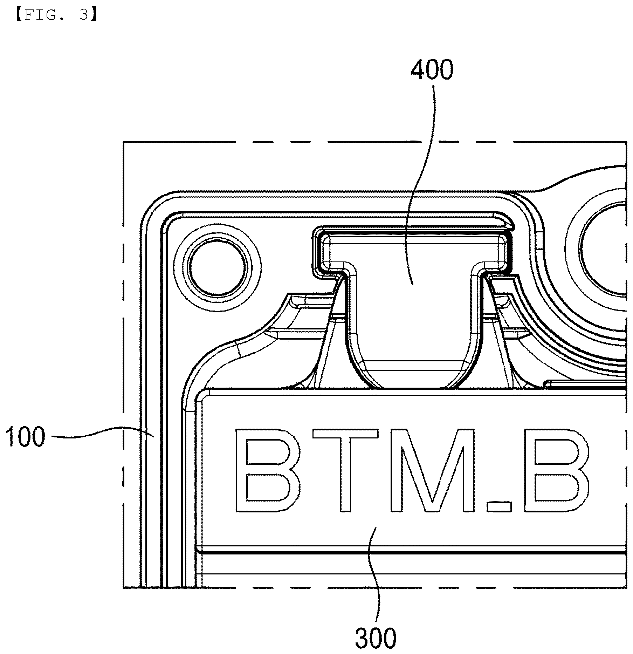

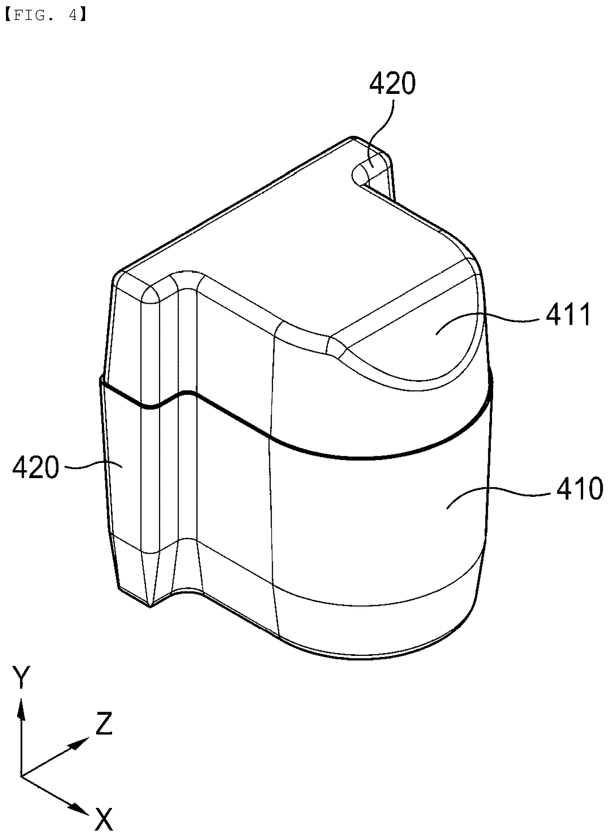

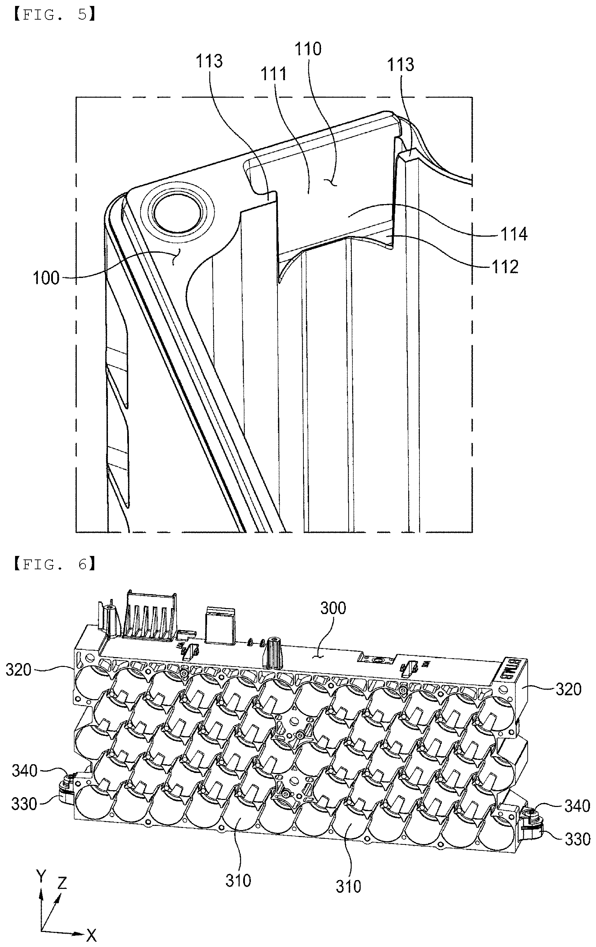

FIG. 3 is an enlarged view showing part A of FIG. 2, FIG. 4 is a perspective view of the first stopper mounted in the battery pack according to the preferred embodiment of the present invention, FIG. 5 is an enlarged view of a first receiving portion configured to receive the first stopper in part A of FIG. 3, and FIG. 6 is a perspective view of the module frame mounted in the battery pack according to the preferred embodiment of the present invention.

The first stopper of the present invention will be described in detail with reference to FIGs. 3 to 6.

The first stopper 400 includes a first pressing portion 410 having a column shape brought into tight contact with a pressure surface 320 of the module frame 300, which is an outer surface, and a pair of wings 420 extending from opposite sides of the first pressing portion 410 by a predetermined length.

Specifically, when viewed from above, the first stopper 400 has a shape similar to an approximately "T" shape. Here, it is preferable for the front part of the first pressing portion 410, i.e. the part of the first pressing portion brought into tight contact with the pressure surface 320 of the module frame 300, to somewhat protrude toward the front (X-axis direction) in order to increase pressing force, e.g. to be somewhat rounded in a circumferential direction.

Meanwhile, it is preferable for front and rear middle parts of the first pressing portion 410 to slightly protrude in a height direction (Y-axis direction). Specifically, the front middle part of the first pressing portion 410 protrudes farther forwards than front upper and lower parts thereof, and the rear middle part of the first pressing portion protrudes farther rearwards than rear upper and lower parts thereof.

The reason for this is that it is possible to fix the module frame 300 in a tight contact state with stronger force, as previously described, and to prevent separation of the first stopper 400 from a first receiving portion provided in the side wall of the lower case 100, a description of which will follow, after the first stopper is received in the first receiving portion.

In particular, since the front and rear middle parts of the first pressing portion 410 protrude slightly more than the front and rear lower parts thereof, it is possible to easily mount the first stopper in the first receiving portion provided in the side wall of the lower case 100.

Meanwhile, it is preferable for a first inclined surface 411 slightly inclined forwards to be provided on an upper surface of the first pressing portion 410. The reason for this is that it is possible to easily insert the module frame 300 to be mounted into the lower case 100 along the first inclined surface 411.

The first receiving portion 110 configured to fix the first stopper 400 is formed in the side wall of the lower case 100, i.e. the part of the lower case 100 that faces the pressure surface 320 of the module frame 300.

Specifically, the first receiving portion 110 is constituted by a receiving recess 111, a horizontal support projection 112, a pair of vertical support projections 113, and an opening 114.

The receiving recess 111, which is formed so as to receive a part of the first pressing portion 410 and the wing 420 of the first stopper 400, has an approximately rectangular structure when viewed from above, and is brought into tight contact with a rear surface of the first pressing portion 410 and a part of the wing 420.

The horizontal support projection 112 supports a bottom surface of the wing 420 such that the first stopper 400 cannot moved downwards, and the pair of vertical support projections 113 blocks a part of a front surface of the wing 420 such that the first stopper 400 is not separated forwards.

The opening 114 is provided between the pair of vertical support projections 113, and the first pressing portion 410 protrudes forwards by a predetermined length through the opening 114, whereby the first pressing portion 410 presses the pressure surface 320 of the module frame 300.

When describing a process of mounting the first stopper in the first receiving portion 110 in brief, a bolt fastening recess 330 configured to primarily fix the lower case 100 and the module frame 300 is provided under a side surface of the module frame 300, as shown in FIG. 6. Preferably, therefore, the module frame 300 is received in the lower case 100, the lower case 100 and the module frame 300 are fixed to each other using a bolt 340, and the first stopper 400 is mounted in the first receiving portion 110.

Of course, it is obvious that the first pressing portion 410 must have a length sufficient to securely press the pressure surface 320 of the module frame 300 when the first stopper 400 is mounted in the first receiving portion 110.

Meanwhile, the material for the first stopper 400 is not particularly restricted as long as the material exhibits predetermined elasticity. As an example, silicone may be used.

In addition, although no battery cell is shown in FIG. 6, a battery cell, more specifically a cylindrical battery cell, is received in a battery cell receiving recess 310 of the module frame 300.

The cylindrical battery cell generally includes an electrode assembly, an insulation member, a positive electrode lead wire, a cap assembly, and a battery can configured to receive the above components. The electrode assembly may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other.

In general, the positive electrode lead wire, which is attached to an upper end of the electrode assembly, is electrically connected to the cap assembly, and a negative electrode lead wire, which is attached to a lower end of the electrode assembly, is connected to a bottom of the battery can. Meanwhile, the insulation member may be located at an upper part of the electrode assembly, and the insulation member serves to insulate between the electrode assembly and the cap assembly.

The cap assembly is located at an upper part of the insulation member so as to be electrically connected to the positive electrode lead wire attached to the upper end of the electrode assembly, and is coupled to an open end of an upper part of the battery can to hermetically seal the electrode assembly received in the battery can.

Specifically, the cap assembly may be configured such that a current cut-off member, a current cut-off gasket, a safety vent, and a top cap are sequentially stacked from the bottom, and a crimping gasket and a welding holder may be located at outer edges of the safety vent and the top cap.

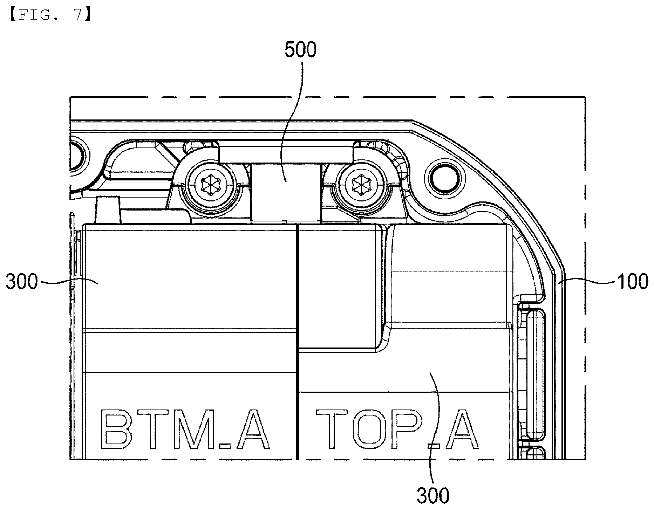

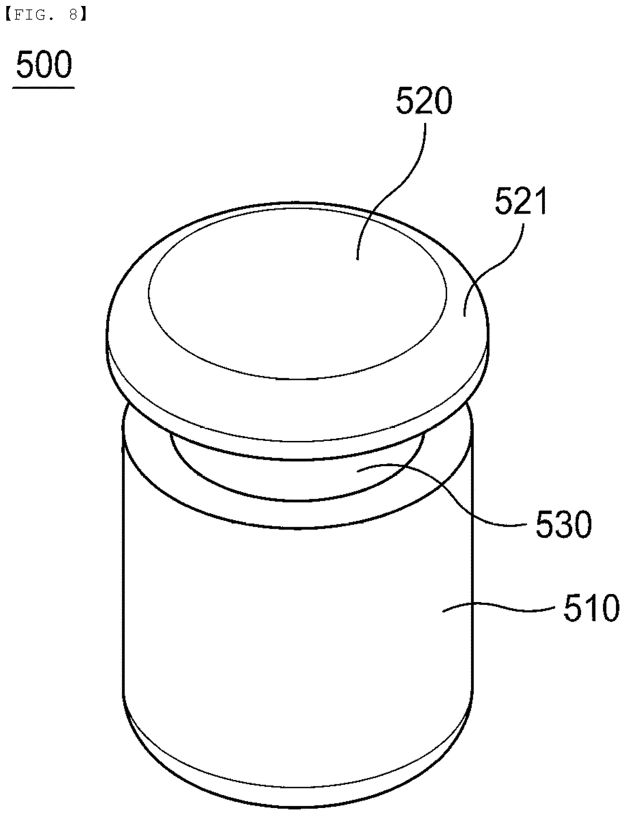

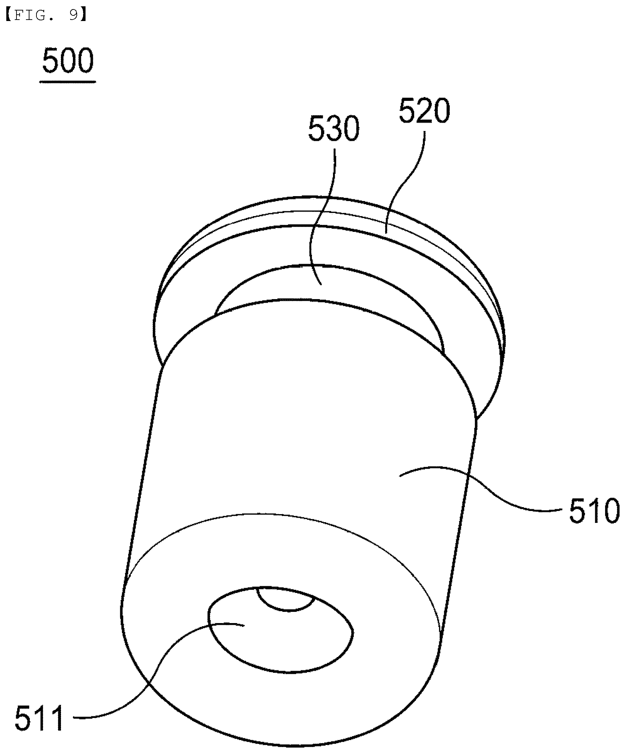

FIG. 7 is an enlarged view showing part B of FIG. 2, FIG. 8 is a front perspective view of the second stopper mounted in the battery pack according to the preferred embodiment of the present invention, and FIG. 9 is a bottom perspective view of the second stopper shown in FIG. 8.

The second stopper 500 will be described with reference to FIGs. 7 to 9.

The second stopper 500 includes a second pressing portion 510 having a column shape, a head portion 520, and a connection portion 530.

Specifically, it is preferable for the second pressing portion 510 to have a cylindrical shape having a structure in which an end of the second pressing portion is somewhat curved while the second pressing portion has a predetermined diameter such that one side of the second pressing portion is brought into tight contact with the pressure surface 320 of the module frame 300 and the other side of the second pressing portion is brought into tight contact with an inner surface of the lower case 100.

Here, it is preferable for a depressed portion 511 dented inwards to be provided in one end of the second pressing portion 510, i.e. the part of the second pressing portion brought into tight contact with the pressure surface 320 of the module frame 300, so as to form a predetermined space. The reason for this is that it is possible to further attenuate impact by the empty space formed by the depressed portion 511.

The head portion 520 is located at an outer surface of the lower case 100, and an inner surface of the head portion 520 may be brought into tight contact with the outer surface of the lower case 100. The head portion may be formed in a circular shape having a predetermined thickness. The connection portion 530 is configured to connect the second pressing portion 510 and the head portion 520 to each other.

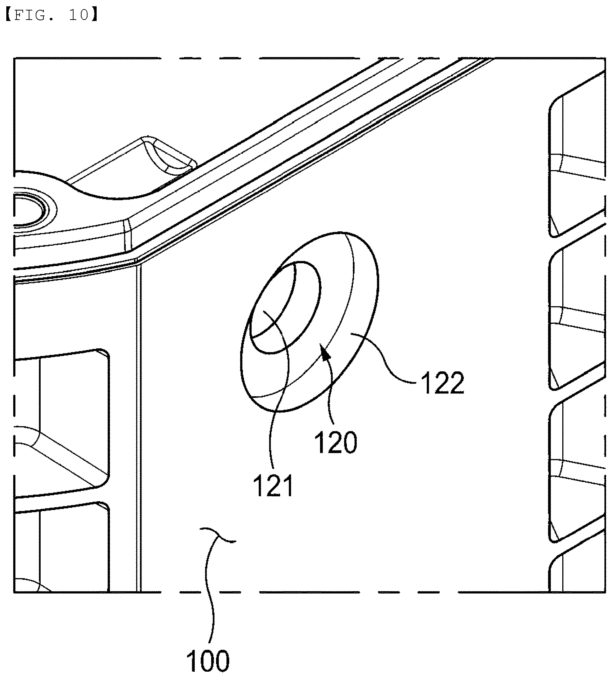

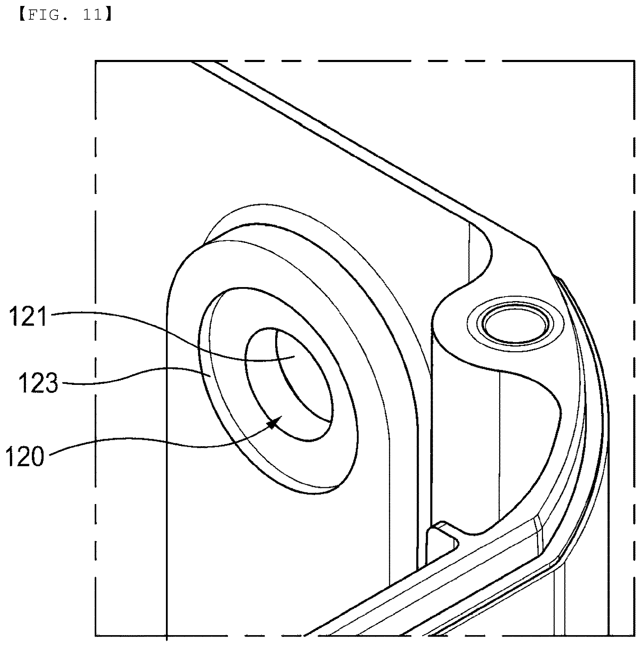

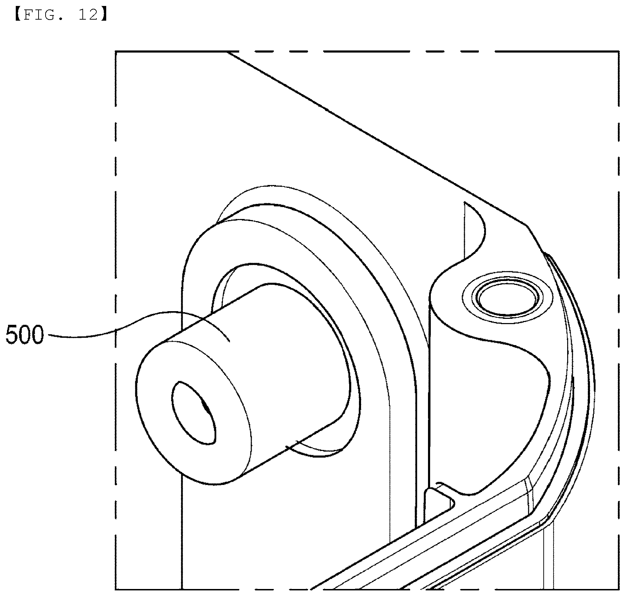

FIG. 10 is a perspective view of a second receiving portion in which the second stopper is mounted when viewed from the outside of the lower case, FIG. 11 is a perspective view of the second receiving portion in which the second stopper is mounted when viewed from the inside of the lower case, and FIG. 12 is a perspective view illustrating the state in which the second stopper is mounted to part B of FIG. 2.

The second receiving portion 120 configured to fix the second stopper 500 will be described with reference to FIGs. 10 to 12.

The second receiving portion 120 configured to fix the second stopper 500 is provided in the side wall of the lower case 100, i.e. the part of the lower case that faces the pressure surface 320 of the module frame 300.

Specifically, the second receiving portion 120 is constituted by a through-hole 121, an outer support projection 122, and an inner support projection 123.

First, the through-hole 121, which is the part at which the connection portion 530 is located, has a diameter slightly less than the diameter of the connection portion 530 such that the connection portion 530 can be securely supported and moisture cannot be introduced, and the head portion 520 is supported by the outer support projection 122.

Here, it is preferable for the outer support projection 122 to be slightly depressed inwardly of the side wall so as not to protrude out of the outer surface of the lower case 100 when the head portion 520 is located, and it is preferable for the outer support projection to have a diameter slightly greater than the diameter of the head portion 520 while having a circular shape corresponding to the outer shape of the head portion 520.

It is preferable for the inner support projection 123 to be slightly depressed so as to support a part of the second pressing portion 510, i.e. the vicinity of the connection portion 530, and it is more preferable for the inner support projection 123 to have a diameter slightly greater than the diameter of the connection portion 530 while having a circular shape identical to the outer shape of the connection portion 530.

Meanwhile, it is preferable that the diameter of the head portion 520 be the largest and that the diameter be smaller in the order of the second pressing portion 510 and the connection portion 530. The reason for this is that it is possible to easily mount the second stopper 500 in the second receiving portion 120 and to prevent the second stopper 500 from being easily separated from the second receiving portion 120.

It is obvious that the second pressing portion 510 must have a length sufficient to securely press the pressure surface 320 of the module frame 300 when the second stopper 500 is mounted in the second receiving portion 120.

When describing a process of mounting the second stopper in the second receiving portion 210, the module frame 300 is received in the lower case 100, the lower case 100 and the module frame 300 are fixed to each other using a bolt B, and the second stopper 500 is mounted in the second receiving portion 120, as described in connection with the first receiving portion 110.

Here, as a detailed assembly method of the second stopper 500, the second pressing portion 510 is pushed from the outer surface to the inner surface of the lower case 100 until the second pressing portion extends through the through-hole 121 and reaches the inner support projection 123.

Meanwhile, the second stopper 500 may be made of the same material as the first stopper 400.

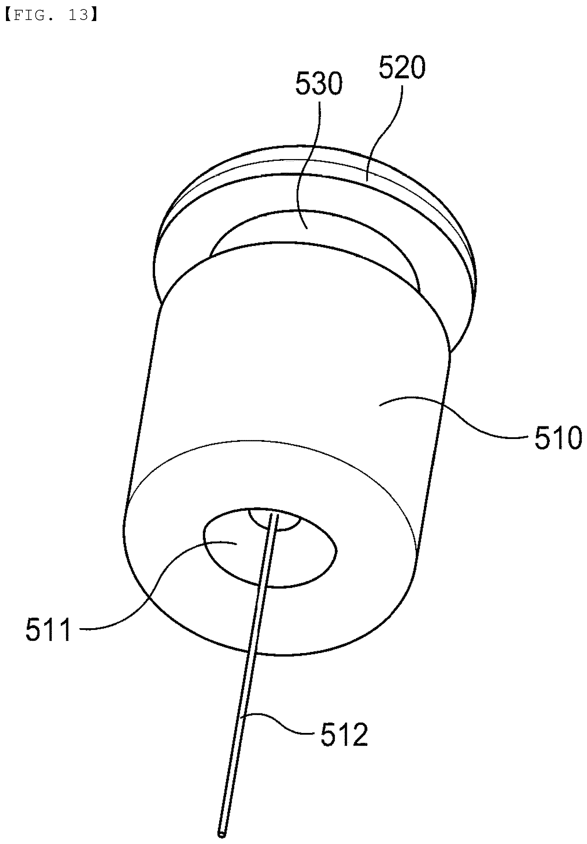

FIG. 13 is a perspective view of the second stopper before being mounted in the battery pack when viewed from below. The second stopper 500 shown in FIG. 13 is identical in construction to the second stopper described above except that a grip bar 512 having one side connected to the depressed portion 511 and extending long while having a diameter less than the diameter of the through-hole 121 is further provided.

The grip bar 512 may assist in more convenient assembly of the second stopper 500. Specifically, the grip bar 512 is inserted through the through-hole 121, and the head portion 520 is pushed in while pulling the grip bar 512 with one hand. Of course, a part of the grip bar 512 may be cut after assembly of the second stopper 500 in the second receiving portion 120.

The battery pack may be used as a power source for various kinds of devices.

**(Description of Reference Numerals)**

| | | | |
|---|---|---|---|
| 100: | Lower case | | |
| 110: | First receiving portion | | |
| 111: | Receiving recess | 112: | Horizontal support |
| | projection | | |
| 113: | Vertical support projection | 114: | Opening |
| 120: | Second receiving portion | | |
| 121: | Through-hole | 122: | Outer support projection |
| 123: | Inner support projection | | |
| 200: | Upper case | | |
| 300: | Module frame | | |
| 310: | Battery cell receiving recess | | |
| 320: | Pressure surface | | |
| 330: | Bolt fastening recess | | |
| 340: | Bolt | | |
| 400: | First stopper | | |
| 410: | First pressing portion | 411: | First inclined surface |
| 420: | Wing | | |
| 500: | Second stopper | | |
| 510: | Second pressing portion | | |
| 511: | Depressed portion | 512: | Grip bar |
| 520: | Head portion | 521: | Second inclined surface |
| 530: | Connection portion | | |

## Claims

1. A battery pack comprising:
a lower case (100) provided with a space having a predetermined size;
an upper case (200) located at an upper part of the lower case (100) to be fastened to the lower case (100);
at least one module frame (300) received in the space of the lower case (100) and a space of the upper case (200), the module frame (300) being provided with a battery cell receiving recess (310); and
a battery cell received in the battery cell receiving recess (310),
wherein an impact attenuation member configured to protect the module frame (300) from external impact is disposed between an outer surface of the module frame (300) and an inner surface of the lower case (100), , wherein the impact attenuation member includes a first stopper (400), and
wherein the first stopper (400) comprises a first pressing portion (410) having a column shape in contact with the outer surface of the module frame (300) and a pair of wings (420) extending from opposite sides of the first pressing portion (410) by a predetermined length,
**characterized in that** a first receiving portion (110) configured to fix the first stopper (400) is disposed in a side wall of the lower case (100), and
wherein the first receiving portion (110) comprises a receiving recess (111) configured to encompass a rear surface and a side surface of each wing (420) such that the wing (420) is seated and fixed, a horizontal support projection (112) configured to support a bottom surface of the wing (420), a pair of vertical support projections (113) configured to support a part of a front surface of the wing (420), and an opening (114) between the pair of vertical support projections (113) such that the first pressing portion (410) protrudes forwards by a predetermined length.

2. The battery pack according to claim 1, wherein a front middle part of the first pressing portion (410) protrudes farther forwards than front upper and lower parts of the first pressing portion (410) in a height direction.

3. The battery pack according to claim 1, wherein a rear middle part of the first pressing portion (410) protrudes farther rearwards than rear upper and lower parts of the first pressing portion (410) in a height direction.

4. A battery pack comprising:
a lower case (100) provided with a space having a predetermined size;
an upper case (200) located at an upper part of the lower case (100) to be fastened to the lower case (100);
at least one module frame (300) received in the space of the lower case (100) and a space of the upper case (200), the module frame (300) being provided with a battery cell receiving recess (310); and
a battery cell received in the battery cell receiving recess (310),
wherein an impact attenuation member configured to protect the module frame (300) from external impact is disposed between an outer surface of the module frame (300) and an inner surface of the lower case (100),
wherein the impact attenuation member includes a second stopper (500), and
wherein the second stopper (500) comprises a second pressing portion (510) having a column shape, the second pressing portion (510) having one side in contact with the outer surface of the module frame (300) and the other side in contact with the inner surface of the lower case (100), a head portion (520) having one surface in contact with an outer surface of the lower case (100), and a connection portion (530) configured to connect the second pressing portion (510) and the head portion (520) to each other,
**characterized in that** a second receiving portion (120) configured to fix the second stopper (500) is in a side wall of the lower case (100), and
wherein the second receiving portion (120) comprises a through-hole (121) configured to allow the connection portion (530) to be disposed therein, an outer support projection (122) formed at the outer surface of the lower case (100), the outer support projection (122) being configured to support the head portion (520), and an inner support projection (123) formed at the inner surface of the lower case (100), the inner support projection (123) being configured to support a part of the second pressing portion (510).

5. The battery pack according to claim 4, wherein each of the second pressing portion (510), the head portion (520), and the connection portion (530) is cylindrical,
wherein a diameter of the connection portion (530) is less than a diameter of each of the second pressing portion (510) and the head portion (520), and
wherein a diameter of the through-hole (121) is less than the diameter of each of the second pressing portion (510) and the head portion (520).

6. The battery pack according to claim 5, wherein the diameter of the head portion (520) is greater than the diameter of the second pressing portion (510).

7. The battery pack according to claim 4, wherein a depressed portion (511) is disposed in one end of the second pressing portion (510) to form a predetermined space.

8. A device having the battery pack according to any one of claims 1 to 7 mounted therein.

## Patentansprüche

1. Batteriepack, umfassend:
ein unteres Gehäuse (100), welches mit einem Raum bereitgestellt ist, welcher eine vorbestimmte Größe aufweist;
ein oberes Gehäuse (200), welches an einem oberen Teil des unteren Gehäuses (100) angeordnet ist, um an dem unteren Gehäuse (100) befestigt zu sein;
wenigstens einen Modulrahmen (300), welcher in dem Raum des unteren Gehäuses (100) und einem Raum des oberen Gehäuses (200) aufgenommen ist, wobei der Modulrahmen (300) mit einer Batteriezelle-Aufnahmevertiefung (310) bereitgestellt ist; und
eine Batteriezelle, welche in der Batteriezelle-Aufnahmevertiefung (310) aufgenommen ist,
wobei ein Beeinflussungsabschwächungselement, welches dazu eingerichtet ist, den Modulrahmen (300) von einer externen Beeinflussung zu schützen, zwischen einer äußeren Fläche des Modulrahmens (300) und einer inneren Fläche des unteren Gehäuses (100) angeordnet ist,
wobei das Beeinflussungsabschwächungselement ein erstes Stoppelement (400) umfasst, und
wobei das erste Stoppelement (400) einen ersten Pressabschnitt (410), welcher eine Säulenform aufweist, welche in Kontakt mit der äußeren Fläche des Modulrahmens (300) ist, und ein Paar von Flügeln (420) umfasst, welches sich von entgegengesetzten Seiten des ersten Pressabschnitts (410) um eine vorbestimmte Länge erstrecken,
**dadurch gekennzeichnet, dass** ein erster Aufnahmeabschnitt (110), welcher dazu eingerichtet ist, das erste Stoppelement (400) zu fixieren, in einer Seitenwand des unteren Gehäuses (100) angeordnet ist, und
wobei der erste Aufnahmeabschnitt (110) eine Aufnahmevertiefung (111), welche dazu eingerichtet ist, eine hintere Fläche und eine Seitenfläche jedes Flügels (420) zu umgeben, so dass der Flügel (420) sitzt und fixiert ist, einen horizontalen Stützvorsprung (112), welcher dazu eingerichtet ist, eine untere Fläche des Flügels (420) zu stützen, ein Paar vertikaler Stützvorsprünge (113), welche dazu eingerichtet sind, einen Teil einer vorderen Fläche des Flügels (420) zu stützen, und eine Öffnung (114) zwischen dem Paar vertikaler Stützvorsprünge (113) umfasst, so dass der erste Pressabschnitt (410) um eine vorbestimmte Länge nach vorne hervorsteht.

2. Batteriepack nach Anspruch 1, wobei ein vorderer Mittelteil des ersten Pressabschnitts (410) in einer Höhenrichtung weiter nach vorne hervorsteht als vordere obere und untere Teile des ersten Pressabschnitts (410).

3. Batteriepack nach Anspruch 1, wobei ein hinterer Mittelteil des ersten Pressabschnitts (410) in einer Höhenrichtung weiter nach hinten hervorsteht als hintere obere und untere Teile des ersten Pressabschnitts (410).

4. Batteriepack, umfassend:
ein unteres Gehäuse (100), welches mit einem Raum bereitgestellt ist, welcher eine vorbestimmte Größe aufweist;
ein oberes Gehäuse (200), welches an einem oberen Teil des unteren Gehäuses (100) angeordnet ist, um an dem unteren Gehäuse (100) befestigt zu sein;
wenigstens einen Modulrahmen (300), welcher in dem Raum des unteren Gehäuses (100) und einem Raum des oberen Gehäuses (200) aufgenommen ist, wobei der Modulrahmen (300) mit einer Batteriezelle-Aufnahmevertiefung (310) bereitgestellt ist; und
eine Batteriezelle, welche in der Batteriezelle-Aufnahmevertiefung (310) aufgenommen ist,
wobei ein Beeinflussungsabschwächungselement, welches dazu eingerichtet ist, den Modulrahmen (300) von einer externen Beeinflussung zu schützen, zwischen einer äußeren Fläche des Modulrahmens (300) und einer inneren Fläche des unteren Gehäuses (100) angeordnet ist,
wobei das Beeinflussungsabschwächungselement ein zweites Stoppelement (500) umfasst, und
wobei das zweite Stoppelement (500) einen zweiten Pressabschnitt (510), welcher eine Säulenform aufweist, wobei der zweite Pressabschnitt (510) eine Seite in Kontakt mit der äußeren Fläche des Modulrahmens (300) und die andere Seite in Kontakt mit der inneren Fläche des unteren Gehäuses (100) aufweist, einen Kopfabschnitt (520), welcher eine Fläche in Kontakt mit einer äußeren Fläche des unteren Gehäuses (100) aufweist, und einen Verbindungsabschnitt (530) umfasst, welcher dazu eingerichtet ist, den zweiten Pressabschnitt (510) und den Kopfabschnitt (520) miteinander zu verbinden,
**dadurch gekennzeichnet, dass** ein zweiter Aufnahmeabschnitt (120), welcher dazu eingerichtet ist, das zweite Stoppelement (500) zu fixieren, in einer Seitenwand des unteren Gehäuses (100) ist, und
wobei der zweite Aufnahmeabschnitt (120) ein Durchgangsloch (121), welches dazu eingerichtet ist, es dem Verbindungsabschnitt (530) zu ermöglichen darin angeordnet zu sein, einen äußeren Stützvorsprung (122), welcher an der äußeren Fläche des unteren Gehäuses (100) gebildet ist, wobei der äußere Stützvorsprung (122) dazu eingerichtet ist, den Kopfabschnitt (520) zu stützen, und einen inneren Stützvorsprung (123) umfasst, welcher an der inneren Fläche des unteren Gehäuses (100) gebildet ist, wobei der innere Stützvorsprung (123) dazu eingerichtet ist, einen Teil des zweiten Pressabschnitts (510) zu stützen.

5. Batteriepack nach Anspruch 4, wobei jeder aus dem zweiten Pressabschnitt (510), dem Kopfabschnitt (520) und dem Verbindungsabschnitt (530) zylindrisch ist,
wobei ein Durchmesser des Verbindungsabschnitts (530) weniger als ein Durchmesser von jedem aus dem zweiten Pressabschnitt (510) und dem Kopfabschnitt (520) beträgt, und
wobei ein Durchmesser des Durchgangslochs (121) weniger als ein Durchmesser von jedem aus dem zweiten Pressabschnitt (510) und dem Kopfabschnitt (520) beträgt.

6. Batteriepack nach Anspruch 5, wobei der Durchmesser des Kopfabschnitts (520) größer als der Durchmesser des zweiten Pressabschnitts (510) ist.

7. Batteriepack nach Anspruch 4, wobei ein abgesenkter Abschnitt (511) in einem Ende des zweiten Pressabschnitts (510) angeordnet ist, um einen vorbestimmten Raum zu bilden.

8. Vorrichtung, welche den Batteriepack nach einem der Ansprüche 1 bis 7 darin montiert aufweist.

## Revendications

1. Bloc-batterie comprenant :
un boîtier inférieur (100) pourvu d'un espace ayant une taille prédéterminée ;
un boîtier supérieur (200) situé au niveau d'une partie supérieure du boîtier inférieur (100) pour être fixé au boîtier inférieur (100) ;
au moins un cadre de module (300) reçu dans l'espace du boîtier inférieur (100) et un espace du boîtier supérieur (200), le cadre de module (300) étant pourvu d'un creux de réception d'élément de batterie (310) ; et
un élément de batterie reçu dans le creux de réception d'élément de batterie (310),
dans lequel un organe d'atténuation d'impact configuré pour protéger le cadre de module (300) d'un impact externe est disposé entre une surface extérieure du cadre de module (300) et une surface intérieure du boîtier inférieur (100),
dans lequel l'organe d'atténuation d'impact comporte un premier tampon (400), et
dans lequel le premier tampon (400) comprend une première partie de pression (410) ayant une forme de colonne en contact avec la surface extérieure du cadre de module (300) et une paire d'ailes (420) s'étendant à partir de côtés opposés de la première partie de pression (410) sur une longueur prédéterminée,
**caractérisé en ce qu'**une première partie de réception (110) configurée pour fixer le premier tampon (400) est disposée dans une paroi latérale du boîtier inférieur (100), et dans lequel la première partie de réception (110) comprend un creux de réception (111) configuré pour englober une surface arrière et une surface latérale de chaque aile (420) de sorte que l'aile (420) soit installée et fixée, une saillie de support horizontale (112) configurée pour supporter une surface de dessous de l'aile (420), une paire de saillies de support verticales (113) configurées pour supporter une partie d'une surface avant de l'aile (420), et une ouverture (114) entre la paire de saillies de support verticales (113) de sorte que la première partie de pression (410) fasse saillie vers l'avant sur une longueur prédéterminée.

2. Bloc-batterie selon la revendication 1, dans lequel une partie centrale avant de la première partie de pression (410) fait saillie plus loin vers l'avant que les parties supérieure et inférieure avant de la première partie de pression (410) dans une direction de hauteur.

3. Bloc-batterie selon la revendication 1, dans lequel une partie centrale arrière de la première partie de pression (410) fait saillie plus loin vers l'arrière que les parties supérieure et inférieure arrière de la première partie de pression (410) dans une direction de hauteur.

4. Bloc-batterie comprenant :
un boîtier inférieur (100) pourvu d'un espace ayant une taille prédéterminée ;
un boîtier supérieur (200) situé au niveau d'une partie supérieure du boîtier inférieur (100) pour être fixé au boîtier inférieur (100) ;
au moins un cadre de module (300) reçu dans l'espace du boîtier inférieur (100) et un espace du boîtier supérieur (200), le cadre de module (300) étant pourvu d'un creux de réception d'élément de batterie (310) ; et
un élément de batterie reçu dans le creux de réception d'élément de batterie (310),
dans lequel un organe d'atténuation d'impact configuré pour protéger le cadre de module (300) d'un impact externe est disposé entre une surface extérieure du cadre de module (300) et une surface intérieure du boîtier inférieur (100),
dans lequel l'organe d'atténuation d'impact comporte un second tampon (500), et
dans lequel le second tampon (500) comprend une seconde partie de pression (510) ayant une forme de colonne, la seconde partie de pression (510) ayant un côté en contact avec la surface extérieure du cadre de module (300) et l'autre côté en contact avec la surface intérieure du boîtier inférieur (100), une partie tête (520) ayant une surface en contact avec une surface extérieure du boîtier inférieur (100), et une partie de liaison (530) configurée pour relier la seconde partie de pression (510) et la partie tête (520) l'une à l'autre,
**caractérisé en ce qu'**une seconde partie de réception (120) configurée pour fixer le second tampon (500) est dans une paroi latérale du boîtier inférieur (100), et
dans lequel la seconde partie de réception (120) comprend un trou débouchant (121) configuré pour permettre à la partie de liaison (530) d'être disposée dans celui-ci, une saillie de support extérieure (122) formée au niveau de la surface extérieure du boîtier inférieur (100), la saillie de support extérieure (122) étant configurée pour supporter la partie tête (520), et une saillie de support intérieure (123) formée au niveau de la surface intérieure du boîtier inférieur (100), la saillie de support intérieure (123) étant configurée pour supporter une partie de la seconde partie de pression (510).

5. Bloc-batterie selon la revendication 4, dans lequel chacune de la seconde partie de pression (510), la partie tête (520) et la partie de liaison (530) est cylindrique,
dans lequel un diamètre de la partie de liaison (530) est inférieur à un diamètre de chacune de la seconde partie de pression (510) et la partie tête (520), et
dans lequel un diamètre du trou débouchant (121) est inférieur au diamètre de chacune de la seconde partie de pression (510) et la partie tête (520).

6. Bloc-batterie selon la revendication 5, dans lequel le diamètre de la partie tête (520) est supérieur au diamètre de la seconde partie de pression (510).

7. Bloc-batterie selon la revendication 4, dans lequel une partie enfoncée (511) est disposée dans une extrémité de la seconde partie de pression (510) pour former un espace prédéterminé.

8. Dispositif ayant le bloc-batterie selon l'une quelconque des revendications 1 à 7 monté dans celui-ci.
